# EUROPÄISCHE PATENTANMELDUNG

(11) **EP 2 862 671 A1**
(43) Veröffentlichungstag der Anmeldung: **22.04.2015**
(21) Anmeldenummer: 13188735.8
(22) Anmeldetag: 15.10.2013
(51) Int. Cl.: B23Q 39/02, B23Q 39/00

(54) **Vorrichtung zur Bearbeitung von stangenförmigen Profilrohlingen**

(71) Anmelder: BDM Germany GmbH, 33415 Verl (DE)
(72) Erfinder: Jacobebbinghaus, Dirk, 33813 Oerlinghausen (DE)
(74) Vertreter: Flötotto, Hubert

(57) **Zusammenfassung**

Die Erfindung betrifft eine Vorrichtung (1) zur Bearbeitung eines stangenförmigen Profilrohlings (2) wie beispielsweise einem Kunststoffprofil, einem Aluminiumprofil, einem Holzprofilen oder dergleichen, welches mittels einer Transporteinrichtung (3) an einer Bearbeitungseinrichtung (1) in wenigsten einer Richtung bewegbar und verspannbar ist, und wobei wenigstens ein Bearbeitungswerkzeug (4, 5) in einer Ebene senkrecht zur Transportrichtung angeordnet ist, welches in der X-Y-Z-Ebene verfahrbar ist. Gemäß der Erfindung ist das Bearbeitungswerkzeug (4, 5) an einem in der X-Ebene verfahrbaren Arm (6) der Bearbeitungseinrichtung (1) angeordnet, an dessen freien Ende (7) ein Werkzeugmotor (8) angeordnet ist, dessen Gehäuse (9) an einer senkrecht zum Arm (6) ausgerichteten Rotationsachse (10) mit mehreren Drehwerkzeugen (11) und (12) drehbar gelagert ist.

## Beschreibung

### Technisches Umfeld

Die Erfindung betrifft eine Vorrichtung zur Bearbeitung von stangenförmigen Profilrohlingen wie beispielsweise Kunststoffprofile, Aluminiumprofile, Holzprofile oder dergleichen, welche mittels einer Transporteinrichtung an einer Bearbeitungseinrichtung in wenigstens einer Richtung bewegbar und verspannbar sind und wobei wenigstens ein Bearbeitungswerkzeug in einer Ebene senkrecht zur Transportrichtung angeordnet ist, welches in der X-Y-Z-Ebene verfahrbar ist.

### Stand der Technik

Bei der Bearbeitung von Profilen, wie sie beispielsweise bei der Herstellung von Türen oder Fenstern verwendet werden, sind zahlreiche unterschiedliche Arbeitsvorgänge durchzuführen. Solche Profile können aus Kunststoff, Metall oder Holz bestehen. Auch eine Kombination verschiedener Materialien ist möglich. Werden z. B. Kunststoffhohlprofile für Fenster bearbeitet, so müssen Entwässerungsschlitze schräg in den Falz und/oder nach unten und/oder nach vorne gefräst werden. Außerdem sind Schließteilpositionsbohrungen an einem Blendrahmenprofil und oder an einem Kämpferprofil zu setzen. Weiterhin müssen ggf. Schlosskästen ausgefräst, Nippelschrauben für Rolllädenführungsleisten und Wetterschenkel verbaut werden. Ferner sind im Flügelüberschlag Eckbandbohrungen vorzusehen. Für Entwässerungs- und Belüftungsschlitze sind andere Werkzeugdurchmesser als für Schließteilbohrungen sowie für Scheren- und Eckbandbohrungen erforderlich. Um diese unterschiedlichen Bohrungen und Ausfräsungen durchführen zu können, sind daher verschiedene Bearbeitungswerkzeuge erforderlich. So sind von vornherein verschiedene Bohrer mit jeweils unterschiedlichen Einsätzen oder unterschiedliche Bohrwerkzeuge vorzusehen. Bei der herkömmlichen Bearbeitung von Profilen werden lange Profilstangen auf einen Tisch oder dergleichen gelegt und mit einer an ihrem hinteren Ende greifenden Vorrichtung zu den Bearbeitungsstationen geschoben bzw. gezogen, die entlang der Verschiebeachse der Profilstange angeordnet sind. Es findet somit eine fließbandmäßige Bearbeitung der Profilstangen statt. So ist es bekannt, dass mittels einer Transporteinrichtung an einer Bearbeitungseinrichtung in wenigstens einer Richtung der Profilrohling bewegbar und verspannbar ist und wobei wenigstens ein Bearbeitungswerkzeug in einer Ebene senkrecht zur Transportrichtung angeordnet ist, welches in der X-Z-Y-Ebene verfahrbar ist.

So ist beispielsweise aus der DE 296 10 414 U1 eine Vorrichtung zur Bearbeitung von Profilrohlingen bekannt, bei der zur Abarbeitung der einzelnen Bohrungen oder Fräsungen einzelne erforderliche Werkzeuge auf einem Rahmen angeordnet sind. Der Profilrohling wird hierbei durch den Rahmen mittels der Transporteinrichtung geführt, so dass aufgrund dieser Ausbildung der Bearbeitungsvorrichtung eine kompakte und kleine Bauweise erreicht wird, da insbesondere die zur Bearbeitung dienenden Einzelaggregate aus der Serienanordnung in eine Ebenenanordnung überführt worden sind. Nun liegen die einzelnen Bearbeitungswerkzeuge wie Bohrfräs-, Schraub-, Schleifund Sägewerkzeuge in einer Ebene, wobei der zu bearbeitende Rohling durch die Bearbeitungsebene hindurch geführt wird, so dass entsprechend der Stellung des Rohlings und der Zuordnung des entsprechenden Werkzeugs die Bearbeitung am Rohling vorgenommen werden kann.

Bei dieser aus dem Stand der Technik bekannten Vorrichtung wird es als nachteilig angesehen, dass die Werkzeuge vornehmlich senkrecht zum Profil in dem Rahmen angeordnet sind, wobei, wenn sie unter einem Winkel angeordnet werden sollen, diese am Rahmen auch entsprechend ausgerichtet werden müssen. Diese Rahmenhalterung für die Werkzeuge hat auch zudem den Nachteil, dass entsprechend viele Motoren mit entsprechenden Werkzeugen an dem Rahmen vorgesehen werden müssen, um auf diese Weise die entsprechenden Durchmesser der Fräsungen oder auch der Bohrungen an dem Profilrohling vornehmen zu können.

### Aufgabe

Der Erfindung stellt sich somit das Problem eine Vorrichtung zum Bearbeiten von stangenförmigen Werkstücken derart weiterzubilden, welche hinsichtlich der einzusetzenden Werkzeuge gering ausfällt, wobei insbesondere eine Bearbeitung an dem Profilrohling in unterschiedlichen Winkellagen um das Profil herum vorgenommen werden kann.

### Lösung

Erfindungsgemäß wird das Problem mit den Merkmalen des Anspruchs 1 gelöst, vorteilhafte Ausgestaltungen der Erfindung ergeben sich aus den Unteransprüchen.

Die mit der Erfindung erreichten Vorteile bestehen nun darin, dass aufgrund eines am Arm der Bearbeitungseinrichtung rotierend gelagerten Gehäuses eines Werkzeugmotors mehrere Bearbeitungswerkzeuge zum Einsatz kommen können, die in jeder Winkellage einen Eingriff am Profilrohling vornehmen können. So sind ein Bohrer und ein Fräser an einem Bearbeitungswerkzeug mit einem Motor vorgesehen, wobei durch Drehen des Gehäuses an der Rotationsachse das entsprechend vorgehaltene Werkzeug, hier ein Bohrer oder ein Fräser, zum Einsatz kommen kann. Soll beispielsweise für Schließbleche eine Bohrung erstellt werden und anschließend ein Entwässerungsschlitz gefräst werden, so kann mit einem Bearbeitungswerkzeug durch Verschwenkung um 180 ° das entsprechende Werkzeug hier abgerufen werden, so dass entweder ein Fräser oder ein Bohrer zum Einsatz kommt, der die entsprechenden Arbeiten am Profilrohling durchführt. Aufgrund der Verfahrbarkeit und der Drehbarkeit des Bearbeitungswerkzeugs an der Bearbeitungseinrichtung in den unterschiedlichen Ebenen wie X, Y und Z, besteht zudem die Möglichkeit das Profil in jeder Lage von oben, von den Seiten und von unten her mit dem entsprechend vorgehaltenen Werkzeug zu bearbeiten. Die Vorzüge der erfindungsgemäßen Ausführung sind daher insbesondere darin zu sehen, dass eine Reduzierung der Bearbeitungsmotoren erreicht wird, was die Herstellungskosten senkt, wobei zudem eine stufenlose winkelbezogene Bearbeitung an dem Profil vorgenommen werden kann.

Erfindungsgemäß wird das Problem dadurch gelöst, dass das Bearbeitungswerkzeug an einem in der X-Ebene verfahrbaren Arm der Bearbeitungseinrichtung angeordnet ist, an dessen freien Ende ein Werkzeugmotor angeordnet ist, dessen Gehäuse an einer senkrecht zum Arm ausgerichteten Rotationsachse mit mehreren Drehwerkzeugen drehbar gelagert ist. Dabei liegt die Drehachse der Werkzeuge in dem Gehäuse in der X-Ebene der Bearbeitungseinrichtung. Die Drehachse der Werkzeuge umfasst hierbei eine in dem Gehäuse eine drehbar gelagerte durchgehende Spindel.

Hierbei erstreckt sich nach einer besonders vorteilhaften Ausgestaltung der Erfindung die Spindel von der einen Gehäuseseite bis zur anderen gegenüberliegenden Gehäuseseite. Somit besteht nun die Möglichkeit, dass an den freien Enden der Spindel jeweils eine Aufnahme für ein Bearbeitungswerkzeug vorgesehen werden kann. Die Bearbeitungswerkzeuge können hierbei entweder Bohrer oder Fräser umfassen.

Nach einer besonders vorteilhaften Ausgestaltung der Bearbeitungseinrichtung sind zwei Bearbeitungseinrichtungen mit je einem Bearbeitungswerkzeug in einem Gestell angeordnet, zwischen denen der Profilrohling mittels der Transporteinrichtung in wenigstens einer Richtung beweg- oder verspannbar ist. Dabei besteht nach einer besonders vorteilhaften Ausgestaltung die einzelne Bearbeitungseinrichtung im Wesentlichen aus einem in der Y-Ebene angeordneten Horizontalträger, auf dem ein in der Z-Ebene angeordneter Vertikalträger angeordnet ist, der in der Y-Ebene verfahrbar ist und wobei an dem Vertikalträger ein den Arm für das Bearbeitungswerkzeug bildender Querträger vorgesehen ist, der in der X-Ebene verfahrbar ist.

Dabei sind jeweils an dem Horizontalträger, dem Vertikalträger und dem Querträger mittels Spindeln geführte Schlitten angeordnet zum Verfahren des Trägers in den jeweiligen Ebenen.

### Beschreibung der Zeichnungen

Ein Ausführungsbeispiel der Erfindung ist in den Zeichnungen rein schematisch dargestellt und wird nachfolgend näher beschrieben. Es zeigt
- Figur 1: eine perspektivische Darstellung der erfindungsgemäßen Vorrichtung zur Bearbeitung von stangenförmigen Profilrohlingen;
- Figur 2: eine Frontansicht der Vorrichtung gemäß der Figur 1;
- Figur 3: eine Seitenansicht der Vorrichtung und
- Figur 4: eine Detailansicht des Gehäuses eines Werkzeugmotors in teilweise geschnittener Ansicht.

### Ausführungsbeispiele

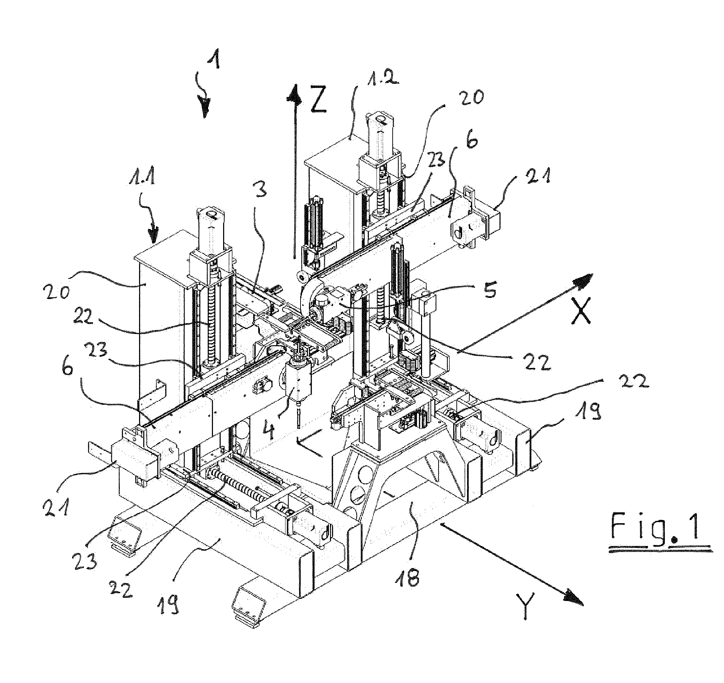

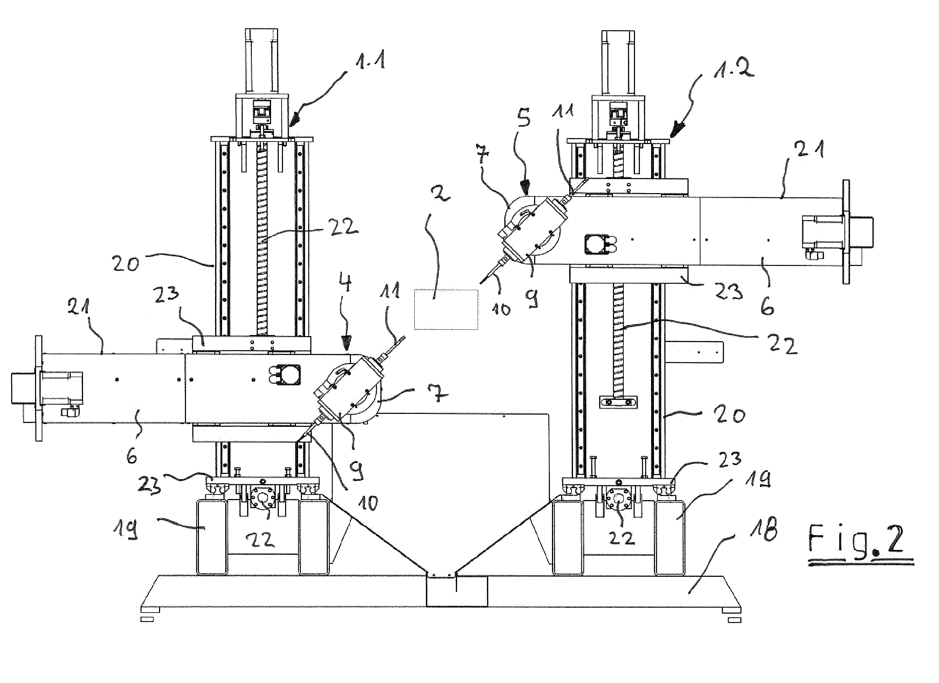

Die Figur 1 zeigt in der Perspektive eine Vorrichtung 1 zur Bearbeitung eines stangenförmigen Profilrohlings 2, wie dieser beispielsweise in der Figur 2 angedeutet ist. Der Profilrohling 2 kann hierbei beispielsweise ein Kunststoffhohlprofil, ein Aluminiumprofil oder ein Holzprofil umfassen. Der Profilrohling 2 wird mittels einer Transporteinrichtung 3 - angedeutet in der Figur 1 - in der Bearbeitungseinrichtung 1 in wenigstens einer Richtung bewegt und verspannt. Dabei sind zwei Bearbeitungswerkzeuge 4 und 5 in einer Ebene senkrecht zur Transportrichtung angeordnet, welche in der X, Y und Z Ebene verfahrbar sind. Zur Verdeutlichung wurden die einzelnen Ebenen in den Figuren entsprechend eingezeichnet.

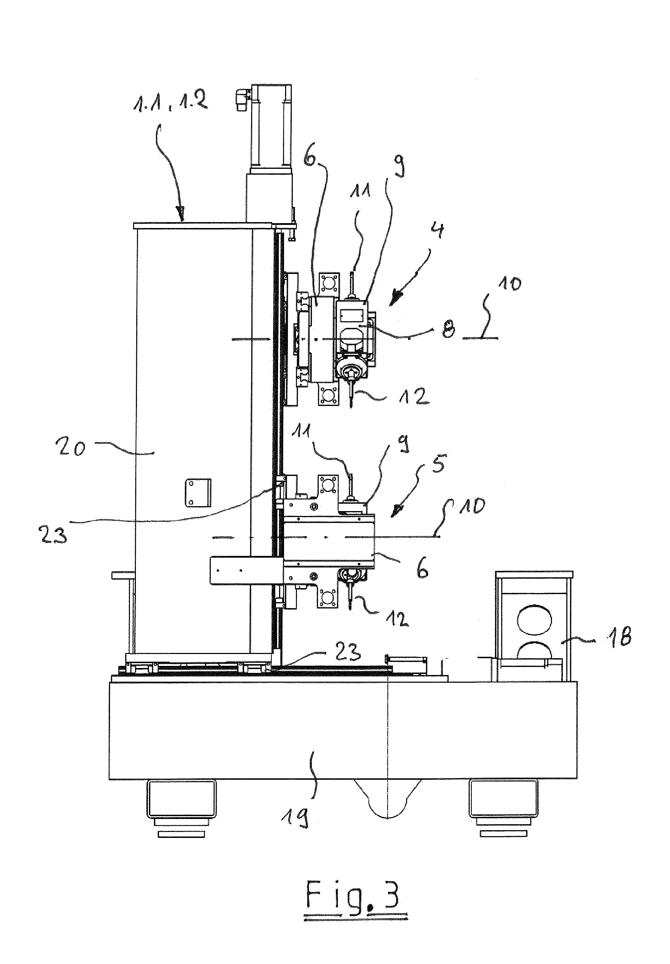

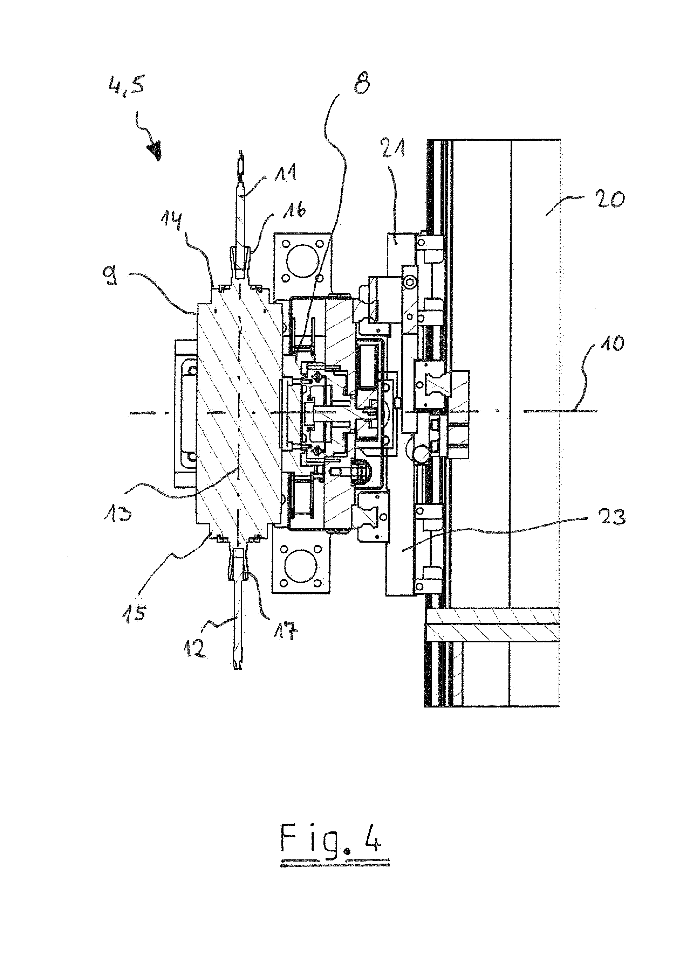

Wie insbesondere aus der Zusammenschau der Figur 2, 3 und 4 erkennbar ist, sind die Bearbeitungswerkzeuge 4, 5 an je einem in der X-Ebene verfahrbarem Arm 6 der Bearbeitungseinrichtung 1 angeordnet, an dessen freien Ende 7 jeweils ein Werkzeugmotor 8 angeordnet ist. Das Gehäuse 9 des Werkzeugmotors 8, insbesondere zu erkennen in der Figur 4, ist an einer senkrecht zum Arm 6 ausgerichteten Rotationsachse 10 mit mehreren Drehwerkzeugen 11 und 12 drehbar gelagert. Bei den Drehwerkzeugen 11 und 12 kann es sich hierbei beispielsweise um einen Bohrer oder einen Fräser handeln, so dass durch die Rotation des Gehäuses 9 an der Rotationsachse 10 entsprechend das gewünschte Werkzeug 11 oder 12 hier zur Bearbeitung an dem Profilrohling 2 zum Einsatz kommen kann.

Wie insbesondere zu erkennen ist, liegt die Drehachse 13 der Werkzeuge 11 und 12 in dem Gehäuse 9 in der X-Ebene der Bearbeitungseinrichtung 1, wobei die Drehachse 13 der Werkzeuge 11 und 12 eine in dem Gehäuse 9 drehbar gelagerte durchgehende Spindel umfasst, die hier mit einer strichpunktartigen Linienführung dargestellt ist.

Wie aus der Figur 2, 3 und 4 deutlich zu erkennen ist, erstreckt sich die Spindel hierbei von der einen Gehäuseseite 14 bis zur anderen gegenüberliegenden Gehäuseseite 15, so dass jeweils an den freien Enden der Spindel jeweils eine Aufnahme 16 und 17 für ein Drehwerkzeug 11 und 12 angeordnet ist. Hierbei umfassen die Drehwerkzeuge 11 und 12, wie bereits schon ausgeführt, entweder einen Bohrer und/oder einen Fräser.

Die Bearbeitungseinrichtung 1, sowie sie sich in der Figur 1 und 2 darstellt, umfasst hierbei zwei Bearbeitungseinrichtungen 1.1 und 1.2 mit je einem Bearbeitungswerkzeug 4 und 5 in einem Gestell 18, wobei zwischen den Bearbeitungseinrichtungen 1.1 und 1.2 der Profilrohling 2 mittels der Transporteinrichtung 3 in wenigstens einer Richtung bewegbar und verspannbar ist.

Wie insbesondere aus der Figur 1, aber auch aus der Figur 2, ersichtlich ist, besteht die einzelne Bearbeitungseinrichtung 1.1 und 1.2 im wesentlichen aus einem in der Y-Ebene angeordneten Horizontalträger 19, auf dem ein in der Z-Ebene angeordneter Vertikalträger 20 angeordnet ist, der in der Y-Ebene verfahrbar ist, und wobei an dem Vertikalträger 20 ein den Arm 6 für das Bearbeitungswerkzeug 4, 5 bildender Querträger 21 vorgesehen ist, der in der X-Ebene verfahrbar ist. Hierbei sind jeweils an dem Horizontalträger 19, dem Vertikalträger 20 und dem Querträger 21 mittels Spindeln 22 geführte Schlitten 24 angeordnet, um auf diese Weise das Verfahren des jeweiligen Trägers an dem anderen Träger in den jeweiligen Ebenen X, Y und Z zu erreichen.

### Bezugszeichenliste

- 1: Vorrichtung/Bearbeitungsvorrichtung 1.1, 1.2
- 2: Profilrohling
- 3: Transporteinrichtung
- 4: Bearbeitungswerkzeug
- 5: Bearbeitungswerkzeug
- 6: Arm
- 7: Freien Ende
- 8: Werkzeugmotor
- 9: Gehäuse Motor
- 10: Rotationsachse
- 11: Drehwerkzeug
- 12: Drehwerkzeug
- 13: Drehachse
- 14: Gehäuseseite
- 15: Gehäuseseite
- 16: Aufnahme
- 17: Aufnahme
- 18: Gestell
- 19: Horizontalträger
- 20: Vertikalträger
- 21: Querträger
- 22: Spindeln
- 23: Schlitten

## Patentansprüche

1. Vorrichtung (1) zur Bearbeitung eines stangenförmigen Profilrohlings (2) wie beispielsweise einem Kunststoffprofil, einem Aluminiumprofil, einem Holzprofil oder dergleichen, welches mittels einer Transporteinrichtung (3) an einer Bearbeitungseinrichtung (1) in wenigsten einer Richtung bewegbar und verspannbar ist, und wobei wenigstens ein Bearbeitungswerkzeug (4, 5) in einer Ebene senkrecht zur Transportrichtung angeordnet ist, welches in der X-Y-Z-Ebene verfahrbar ist,
**dadurch gekennzeichnet,**
**dass** das Bearbeitungswerkzeug (4, 5) an einem in der X-Ebene verfahrbaren Arm (6) der Bearbeitungseinrichtung (1) angeordnet ist, an dessen freien Ende (7) ein Werkzeugmotor (8) angeordnet ist, dessen Gehäuse (9) an einer senkrecht zum Arm (6) ausgerichteten Rotationsachse (10) mit mehreren Drehwerkzeugen (11) und (12) drehbar gelagert ist.

2. Vorrichtung nach Anspruch 1,
**dadurch gekennzeichnet,**
**dass** die Drehachse (13) der Drehwerkzeuge (11) und (12) in dem Gehäuse (9) in der X-Ebene der Bearbeitungseinrichtung (1) liegt.

3. Vorrichtung nach Anspruch 2,
**dadurch gekennzeichnet,**
**dass** die Drehachse (13) der Drehwerkzeuge (11) und (12) eine in dem Gehäuse (9) drehbar gelagerte durchgehende Spindel umfasst.

4. Vorrichtung nach Anspruch 3,
**dadurch gekennzeichnet,**
**dass** sich die Spindel von der einen Gehäuseseite (14) bis zur anderen gegenüberliegenden Gehäuseseite (15) erstreckt.

5. Vorrichtung nach Anspruch 4,
**dadurch gekennzeichnet,**
**dass** an den freien Enden der Spindel jeweils eine Aufnahme (16) und (17) für ein Drehwerkzeug (11, 12) angeordnet ist.

6. Vorrichtung nach Anspruch 1 bis 5,
**dadurch gekennzeichnet,**
**dass** die Drehwerkzeuge (11, 12) Bohrer und/oder Fräser umfassen.

7. Vorrichtung nach Anspruch 1 bis 6,
**dadurch gekennzeichnet,**
**dass** zwei Bearbeitungseinrichtungen (1.1) und (1.2) mit je einem Bearbeitungswerkzeug (4, 5) in einem Gestell (18) angeordnet sind, zwischen denen der Profilrohling (2) mittels der Transporteinrichtung (3) in wenigsten einer Richtung bewegbar und verspannbar ist.

8. Vorrichtung nach Anspruch 1 bis 7,
**dadurch gekennzeichnet,**
**dass** die einzelne Bearbeitungseinrichtung (1.1), (1.2) im Wesentlichen aus einem in der Y-Ebene angeordneter Horizontalträger (19) besteht, auf dem ein in der Z-Ebene angeordneter Vertikalträger (20) angeordnet ist, der in der Y-Ebene verfahrbar ist, und wobei an dem Vertikalträger (20) ein den Arm (6) für das Bearbeitungswerkzeug (4, 5) bildender Querträger (21) vorgesehen ist, der in der X-Ebene verfahrbar ist.

9. Vorrichtung nach Anspruch 8,
**dadurch gekennzeichnet,**
**dass** jeweils an dem Horizontalträger (19), dem Vertikalträger (20) und dem Querträger (21) mittels Spindeln (22) geführten Schlitten (23) angeordnet sind zum Verfahren des Trägers (20, 21) in den jeweiligen Ebenen.
